# EUROPEAN PATENT APPLICATION

(11) **EP 0 965 444 A1**
(43) Date of publication of application: **22.12.1999**
(21) Application number: 99303932.0
(22) Date of filing: 20.05.1999
(51) Int. Cl.: B41C 1/10, B41N 3/00

(54) **A system and method for offset lithographic printing utilizing a reusable plate**

(30) Priority: 17.06.1998 IL 12498198
(71) Applicant: Scitex Corporation Ltd., Herzliya 46103 (IL)
(72) Inventor: Kamir, Yosef, Netanya 42262 (IL)
(74) Representative: Freed, Arthur Woolf

(57) **Abstract**

An offset lithographic printing system which includes an image bearing medium, forming part of the printing cylinder, liquid ejection means for forming an printing image in a pre-determined pattern directly on to an image bearing medium, means for printing the formed image onto a substrate in a conventional offset printing process, and a liquid ejection means connected to a source of erasing fluid. The liquid ejection means eject droplets of the erasing fluid on to the image bearing medium to release the pre-determined pattern, thereby allowing a subsequent image to be formed on to the image bearing medium.

## Description

### FIELD OF THE INVENTION

The present invention relates to offset lithographic printing utilizing a reusable plate.

### BACKGROUND OF THE INVENTION

There are numerous methods known in the art for producing a master printing plate, on which an image is written and which is then used as a printing plate for the reproduction of multiple copies. Examples of such methods are described in "Chemistry and Technology of Printing and Imaging Systems", edited by P. Gregory and published by Blackie Academic & Professional in 1996. Typically, the plate contains one or more coating layers applied to a metal or plastic substrate layer.

The cost of producing a plate is relatively expensive and is generally only economical when utilized for printing large numbers of copies. For short printing runs, the cost of using a printing plate and mounting it on the press adds substantially to the cost per printed copy.

Recent developments in offset lithography uses have led to the use of digitally imaged printing plates whereby information is transferred directly from a computer to the printing plate. Though, the printing plates are relatively easily prepared and quickly imaged and processed, they still contribute a significant cost to the printing process and are uneconomical for the printing of only a few copies.

Another new imaging process, which may be termed "image once print many" utilizes a master plate which is imaged on the press, then used to generate

multiple prints. Various processes, known in the art, have been introduced for printing which do not require the use of a printing plate. For example, a printing process which may be termed "image one - print one" regenerates an image for each print. Chapter 5 of "Chemistry and Technology of Printing and Imaging Systems", edited by P. Gregory and published by Blackie Academic & Professional in 1996, describes ink-jet printing, whereby a jet of ink directly sprays the image onto the plate where the information is digitally applied from a computer, which is an example of an "image one - print one" process. Unfortunately, this process is not competitive with high quality color process printing using a printing plate such as offset lithography, because it is relatively slow and has severe substrate limitations.

Numerous attempts have been made to produce a re-usable imaging surface for a printing process, examples of which are described in US Patent Nos. 4,718,340 and 5,333,548. Generally, the above-mentioned systems generate a "master" which is then used for conventional wet offset printing.

US Patent No. 4,833,486 to Zerillo describes lithographic apparatus for which utilizes an ink-jet image to the transfer an image on to a plate. US Patent No. 5,738,013 to Kellett describes another method of using ink-jet to produce a permanent printing plate.

US Patent No. 5,555,809 to Hirt et al. describes an erasable printing form for offset printing which uses a masking material which is applied to the printing form according to the imaged areas and the non-imaged areas are rendered hydrophilic.

One of the disadvantages of existing offset lithographic printing systems is that each plate that is prepared needs to be separately fitted on to the machine. Thus, for four-color printing, each of the four plates (one for each color) needs to be skillfully fitted in turn on to the offset printing cylinders. Consequently, the preparation of a four-color printing job takes four times as long.

A further disadvantage of existing systems is that any correction or change to a prepared plate requires manual correction by a skilled operator in order to avoid scratching or otherwise damaging the plate.

### SUMMARY OF THE INVENTION

An object of the present invention is to provide an improved imaging system for use in lithographic offset printing which overcome the disadvantages of prior methods.

A further object of the present invention is to provide a system and method for erasing an imaged plate allowing it to be reused for a subsequent offset printing run.

There is thus provided, in accordance with a preferred embodiment of the present invention, an offset lithographic printing system which includes an image bearing medium, forming part of the printing cylinder, liquid ejection means for forming an printing image in a pre-determined pattern directly on to an image bearing medium, means for printing the formed image onto a substrate in a conventional offset printing process, and a liquid ejection means connected to a source of erasing fluid. The liquid ejection means eject droplets of the erasing fluid on to the image bearing medium to release the pre-determined pattern, thereby allowing a subsequent image to be formed on to the image bearing medium.

Additionally, in accordance with a preferred embodiment of the present invention, the system further includes a cleaning system to remove the released pattern.

Furthermore, in accordance with a preferred embodiment of the present invention, the image bearing substrate is aluminum with a grained anodized surface.

Furthermore, in accordance with a preferred embodiment of the present invention, the liquid ejection means includes an ink-jet print head connected to an fluid supply. The fluid supply consists of a solvent, an organic binder, a sensitive diazo compound and a dye colorant. The solvent is 1-methoxy-2-propanol,

Furthermore, in accordance with a preferred embodiment of the present invention, the correcting fluid consists of a solvent, gamma butyrolactone, a mixture of polyacrylic and phosphoric acid and a surface active agent.

Additionally, there is also provided, in accordance with a preferred embodiment of the present invention, a method for erasing a previously imaged and inked plate and preparing the plate for re-imaging. The method includes the steps of:
forming an image in a pre-determined pattern directly on to the previously imaged medium;
releasing the pattern from the previously imaged and inked medium; and
cleaning off the released pattern material from the medium thereby readying the medium for re-imaging.

Furthermore, in accordance with a preferred embodiment of the present invention, the step of releasing includes spraying droplets of a correcting fluid on to the imaged plate.

### BRIEF DESCRIPTION OF THE DRAWINGS

The present invention will be understood and appreciated more fully from the following detailed description taken in conjunction with the appended drawings in which:
Fig. 1 is a schematic illustration of a printing system, constructed and operative in accordance with a preferred embodiment of the present invention;
Fig. 2 is an illustration of the erasing method of an imaged plate in the printing system of Fig.1; and
Fig. 3 is a detailed schematic illustration of the erasing and cleaning units utilized with the printing system of Fig. 1.

### DETAILED DESCRIPTION OF THE PRESENT INVENTION

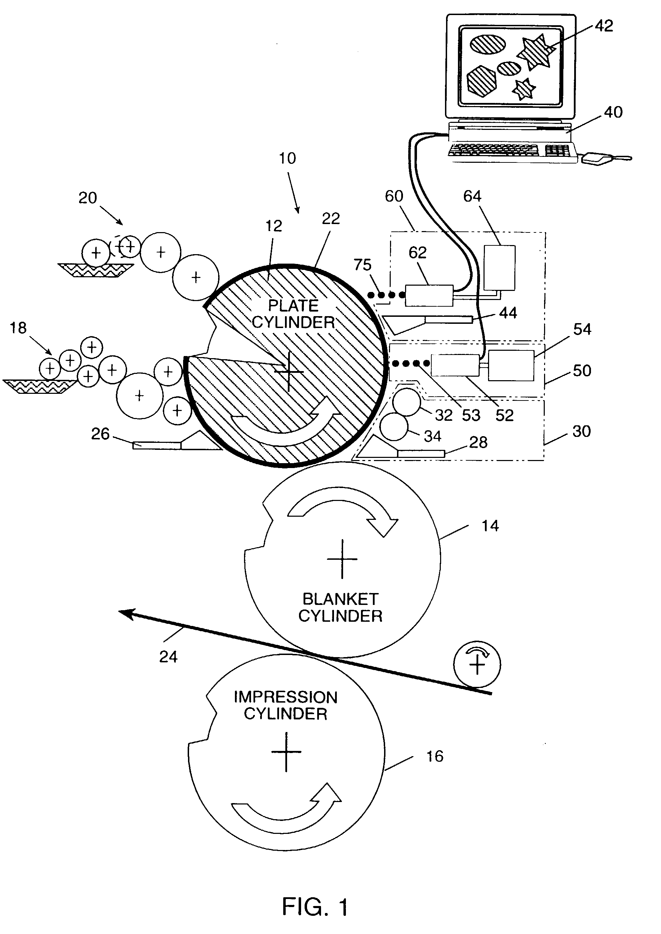

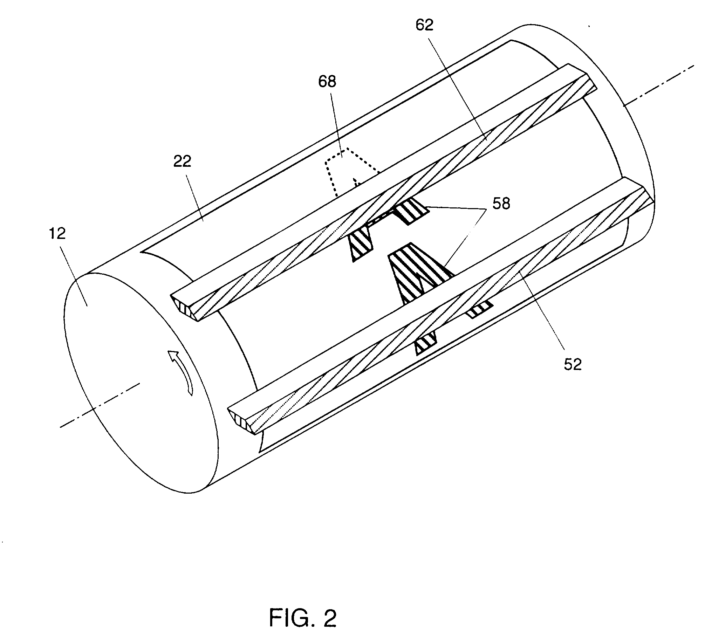

Reference is now made to Figs. 1 and 2. Fig. 1 is a schematic illustration of the printing system, generally designated 10, constructed and operative in accordance with a preferred embodiment of the present invention. Fig. 2 is an illustration of the printing and erasing heads, 52 and 62, respectively, used in printing system 10.

The printing system 10 comprises a plate cylinder 12 onto which is fitted a plate 22, a blanket cylinder 14, an impression cylinder 16, inking rollers 18, dampening rollers 20, a heater 26 and vacuum suction unit 28, all of which are conventionally used in lithographic printing systems.

In addition, printing system 10 further comprises an cleaning unit, generally designated 30 and a computer unit, generally designated 40 coupled to an imaging system, generally designated 50.

It is a feature of the present invention that the printing system 10 further comprises an erasing system, generally designated 60, which is coupled to computer unit 40. Erasing system 60 erases the existing image on the plate 22 and in combination with cleaning unit 30 ensures that the plate can be reused for subsequent re-imaging. Alternatively, the erasing system 60 can be utilized for making changes or corrections to the plate 22 without the necessity of an operator directly coming into contact with the plate 22.

The computer unit 40 comprises conventional processing units (not shown) allowing for an image to be created and displayed on a screen 42. The imaging data is transferred to the imaging system 50 and erasing system 60 by known in the art communications technology. Similarly, the commands to erase the image or correct the image are passed by computer 40 to the erasing system 60 for erasing and correcting the image, respectively.

The plate 22 may be in the form of an independent sheet that is attached to the plate cylinder 12 either by means of a clamping system or bonded to the surface of cylinder 12. It can be integral to the cylinder 12 or it may also be in the form of a sleeve that fits onto the cylinder 12. The material of the plate 22 is preferably aluminum with a grained anodized surface. Such surfaces are well known in the art as they are used in the manufacture of conventional pre-sensitized offset lithographic plates. The surfaces are designed to have excellent hydrophilic properties and to be hard wearing. Although such anodized aluminum is available to the industry, in order to illustrate this invention, a pre-sensitized plate was processed to provide the plate described as 22. The plate used by way of example was the "Electra" plate manufactured by Horsell, U.K. The plate was passed through an offset lithographic plate processor containing the processing solution supplied and recommended by Horsell as suitable for processing the "Electra" plate. The solution removed the entire blue pre-sensitized coating from the plate, leaving a clean grained anodized aluminum surface for use in the invention, as described.

Imaging system 50 may be any suitable imaging system including, for example, an ink-jet system, such as described in EP Patent No. 94305347 to Karlinski, assigned to the present Applicants and incorporated herein by reference.

The imaging system 50 utilizes an ink-jet imaging print head 52 connected to an "ink" supply 54, for imparting the image by ejecting "ink" droplets 53 onto the plate. The "ink" material 53 is a liquid suitable for application by ink-jet print heads. Such materials are available and sold as "Addition" fluids for correcting flaws in standard offset plates. An example of such a material is the material used in the "Addition pen" for offset plates" sold by Plurimetal s.r.l of Verona, Italy. This material comprises a solvent, such as 1-methoxy-2-propanol, an organic binder, a sensitive diazo compound and a dye colorant. Viscosity of such a fluid can be finely adjusted to suit the ink-jet head by further addition of the 1-methoxy-2-propanol solvent. The "addition" fluid, when applied, renders the plate 22 oleophillic.

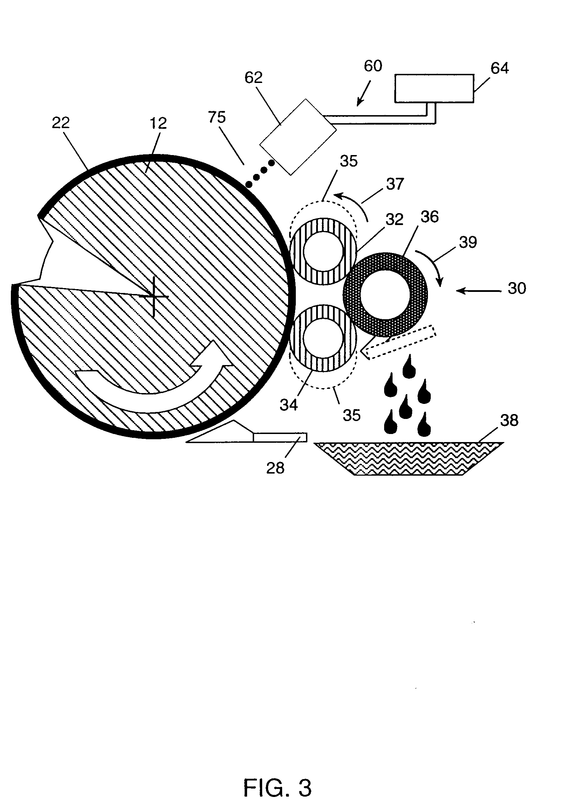

The erasing system 60, which is described in further detail below with reference to Fig. 3, comprises a "correcting" (or "wipe out") print head 62 connected to a container of "correcting" fluid 64. The "correcting" print head 62 is any suitable device for controlled ejection of fluid, such as the device used for the imaging print head 52.

The "correcting" liquid, which is the negative of the "addition" material used for imaging, is specifically intended for correction of offset printing plates, such as plate 22. The "correcting" liquid is used by printers for correcting scratches or other defects on imaged and chemically processed plates in a conventional offset print process, and is available in liquid form or as a "pen".

The "correcting" liquid is commercially available from PluriMetal srl of Verona, Italy and identified by its commercial name of "Posigamma 12". This correcting material consists of a solvent, gamma butyrolactone, a mixture of polyacrylic and phosphoric acid and a surface active agent. The "correction" fluid, when applied, renders the imaged part of plate 22 hydrophilic.

The image may be applied to the full width of the plate 22 by any suitable means such as by moving the imaging print head 52 backwards and forwards along cylinder 12 in a shuttle mode or by using an array print head, these systems being known in the art. During imaging, the inking rollers 18, dampening rollers 20 and cleaning unit 30 are distanced from plate 22, so as to not to interfere with the imaging process. The command of distancing these elements is controlled by the computer 40.

In operation, the plate 22 is placed on the drum, cleaned and dried. The image to be printed is prepared by computer 40 and transferred to the plate 22 by utilizing the ink-jet technology. The "ink" material 53 stored in supply 54 is ejected by imaging print head 52 to apply the "ink" 53 to plate 22, as controlled by computer 40

After imaging, the plate 22 is ready for printing which is carried out by conventional offset methods, which may be described briefly, as follows:

The "addition" material 53 which was imaged on the plate 22 by print head 52 is oleophillic and therefore, attracts the printing ink delivered by inking rollers 18. The dampening rollers 20 apply water to wet the hydrophilic areas of the plate 22, helping to confine the printing ink to the oleophilic areas. Oil-based printing ink is delivered by inking rollers 18 onto the imaged oleophillic areas of the plate 22. The inked image is transferred to blanket cylinder 14 and from there transferred to a substrate 24 such as, for example, paper, which passes between blanket cylinder 14 and the impression cylinder 16. After the printing run has been completed, the image on the plate can be erased for re-imaging. Fig. 2 illustrates the erasing process, by "correcting" print head 62, applying "correcting" fluid to a previously imaged (by imaging print head 52). letter "A" 58. As the cylinder 12 rotates, the "correcting" print head 62 releases the "addition" material forming the image of letter "A" from plate 22, and thus rendering the plate 22 hydrophilic (erased).

Reference is now also made to Fig. 3, which is a detailed illustration of the components of the erasing system 60 and cleaning unit 30. Erasing system 60 comprises a "correcting" (or "wipe out") print head 62 connected to a container 64 of "correcting" fluid75. Cleaning unit 30 comprises rollers 32 and 34, a squeegee 36 and a collector tray 38. The "correcting" print head 62 is any suitable device for controlled ejection of fluid 75, such as the device used for the imaging print head 52. The "correcting" liquid is the negative of the "addition" material used for imaging.

The erasing fluid 75 is any suitable material which may be used as "correcting" liquid, such as the commercially available "Posigamma 12", described hereinabove, from PluriMetal srl of Verona, Italy.

To erase the plate 22, "correcting" print head 62 deposits droplets of liquid supplied from container 64, applying the fluid 75 onto the plate 22 to release the "addition" material from the plate. Rollers 32 and 34 are actuated to move from a non-contact position (indicated by dotted lines 35) to contact with the plate 22. Rollers 32 and 34 rotate in an counter-clockwise direction (arrow 37) to remove the released material which is then wiped by squeegee 36, rotating in a clockwise direction (arrow 39) and collected by collector tray 38. My surplus material is removed by vacuum unit 28.

It will be appreciated by persons skilled in the art that the present invention is also applicable to "plateless" systems, that is to systems which do not require a plate; such as the system described in the Applicant's corresponding application IL 122953, having an oleophobic (or hydrophilic) layer directly coated onto the printing cylinder.

It will be further appreciated by person's skilled in the art that a conventional offset printing press, using plates prepared in the conventional way of UV exposing an imaged film, can be converted to operate according to the present invention, by adding a "sleeve", having a permanent hydrophobic surface, acting as plate 22, to the printing cylinder.

In contrast to the standard offset printing system, where, after the printing run has been completed, the plate is removed and replaced with a new blank plate, the present invention allows for the re-using the plate 22 a number of times, with consequent time and cost savings. Furthermore, corrections can be efficiently made to an imaged plate automatically without danger of scratching the plate or other damage caused by the operator.

It will be appreciated by persons skilled in the art that the present invention is not limited by what has been particularly shown and described herein above. Rather the scope of the invention is defined by the claims which follow:

## Claims

1. An offset lithographic printing system comprising:
a. an image bearing medium, forming part of the printing cylinder.
b. liquid ejection means for forming an printing image in a pre-determined pattern directly on to said image bearing medium;
c. means for printing said formed image onto a substrate; and a liquid ejection means connected to a source of erasing fluid for ejecting droplets of said erasing fluid on to said image bearing medium to release said pre-determined pattern, thereby allowing a subsequent image to be formed on to said image bearing medium.

2. A system according to claim 1 and further comprising a cleaning system to remove said released pattern.

3. A system according to claim 1 wherein said liquid ejection means comprises an ink-jet print head connected to an fluid supply, said fluid supply consists of a solvent, an organic binder, a sensitive diazo compound and a dye colorant.

4. A system according to claim 3 wherein said solvent is 1-methoxy-2-propanol,

5. A system according to claim 1 wherein said erasing fluid consists of a solvent, gamma butyrolactone, a mixture of polyacrylic and phosphoric acid and a surface active agent.

6. A method for erasing a previously imaged and inked plate and preparing for re-imaging, said method comprising the steps of:
forming an image in a pre-determined pattern directly on to a medium; printing to a substrate copies of the inked pattern;
releasing the pre-determined pattern from said previously imaged and inked medium; and
cleaning off the released pattern from said medium thereby readying said medium for re-imaging.

7. A method according to claim 6 wherein said step of releasing comprises the step of spraying droplets of a correcting fluid on to said imaged medium.

8. A method according to claim 7 said correcting fluid consists of a solvent, gamma butyrolactone, a mixture of polyacrylic and phosphoric acid and a surface active agent.
